Europäisches Patentamt

European Patent Office

Office européen des brevets

(19)

(11) Numéro de publication : **0 132 175 B2**

(12) # NOUVEAU FASCICULE DE BREVET EUROPEEN

(45) Date de publication du nouveau fascicule du brevet : **18.03.92 Bulletin 92/12**

(51) Int. Cl.$^5$ : **B64G 1/40**, F17C 13/00, F17C 3/02

(21) Numéro de dépôt : **84401275.7**

(22) Date de dépôt : **20.06.84**

(54) **Réservoir de stockage de liquide à confinement capillaire.**

(30) Priorité : **20.06.83 FR 8310161**

(43) Date de publication de la demande : **23.01.85 Bulletin 85/04**

(45) Mention de la délivrance du brevet : **24.02.88 Bulletin 88/08**

(45) Mention de la décision concernant l'opposition : **18.03.92 Bulletin 92/12**

(84) Etats contractants désignés : **DE GB IT**

(56) Documents cités :
**EP-A- 0 042 784**
**EP-A- 0 043 777**
**DE-A- 2 751 167**
**FR-A- 2 372 642**

(56) Documents cités :
**GB-A- 2 109 760**
**US-A- 4 168 718**
**JOURNAL OF SPACECRAFT AND ROCKETS, vol. 6, no. 1, janvier 1969, pages 32-36, New York (US); S. C. DEBROCK: "Spacecraft capillary propellant retention and control for long-life missions"**
**Aquisition/Expulsion System for Earth Orbital Propulsion System Study, Volume 5 Final Report NASA-CR 134157, October 1973**

(73) Titulaire : **MATRA**
**4 rue de Presbourg**
**F-75116 Paris (FR)**

(72) Inventeur : **Kerebel, Alain**
**1, Passage Pilatre de Rozier**
**F-78000 Versailles (FR)**

(74) Mandataire : **Fort, Jacques et al**
**CABINET PLASSERAUD 84, rue d'Amsterdam**
**F-75009 Paris (FR)**

EP 0 132 175 B2

## Description

La présente invention concerne les réservoirs de stockage de liquide sous pression du type de ceux définis par le préambule de la revendication 1.

L'invention trouve une application particulièrement importante constituée par le stockage d'ergol à bord d'un vehicule spatial qui n'est soumis, au cours d'une partie au moins de sa mission, qu'à une accélération faible et dont la direction peut varier. Le point bas du réservoir change alors, de sorte qu'on ne peut y placer le passage de sortie de façon qu'il soit en permanence alimenté. Deux solutions ont été adoptées pour rendre en permamence disponible un volume minimum de liquide à l'issue d'une phase de fonctionnement en apesanteur. Une première solution consiste à fractionner le réservoir en un compartiment de volume variable, constamment rempli de liquide, et un compartiment de gaz de pressurisation par une membrane. Malheureusement, les membranes actuellement disponibles ne sont pas compatibles avec tous les ergols à un degré suffisant à long terme. Une seconde solution, qui résout ce problème, consiste à munir le réservoir de moyens de collection d'ergol qui utilisent la tension superficielle, pour constituer, autour d'un point de puisage, une zone tampon stockant un volume d'ergol et évitant que ne s'échappe avec l'ergol du gaz de pressurisation qui troublerait le fonctionnement des tuyères alimentées par le réservoir.

Parmi ces moyens de collection, on utilise surtout ceux qui comportent des passages capillaires délimités par des lames, car ils ont des caractéristiques (et notamment une différence de pression maximale avant rupture du ménisque d'interface gaz-liquide) plus régulières et plus reproductibles du fait notamment de leur nettoyage plus facile et une résistance à la corrosion meilleure que les toiles.

Un dispositif connu de confinement à lames (EP-A-0 043 777) du type ci-dessus défini comprend un volume central entouré par une structure capillaire formé d'éléments dirigés radialement et qui délimitent des espaces capillaires de largeur croissant vers l'extérieur. Cette disposition a des inconvénients et des limitations d'emploi. Elle conduit à un volume central impuisable important, car on ne peut prolonger les éléments vers l'intérieur dans le sens radial que dans une limite fixée par une largeur minimum des espaces capillaires. De plus, certaines missions peuvent amener des vitesses de rotation du véhicule importantes autour d'axes d'orientation tels que l'ergol occupant la zone tampon est chassé vers des régions à partir desquelles le dispositif de confinement ne peut être réamorcé.

L'invention vise à fournir un réservoir de stockage du type ci-dessus défini comportant un dispositif de confinement qui répond mieux que ceux antérieurement connus aux exigences de la pratique, notamment en ce qu'il présente un volume impuisable faible et en ce que le risque de désamorçage est réduit pour la quasitotalité des missions envisageables pour un satellite.

Dans ce but, l'invention propose un réservoir de stockage selon la partie caractérisante de la revendication 1.

Le volume de stockage capillaire sera généralement constitué par des zones annulaires minces sensiblement coaxiales, fractionnées en couloirs de développement dans le sens circonférentiel du même ordre de grandeur que l'épaisseur. Ces zones annulaires des parois lisses et des parois ondulées alternées peuvent être délimitées par une bande enroulée en spirale, l'écartement entre deux spires étant fixé par une feuille ondulée. Dans une variante de réalisation, les zones annulaires sont délimitées par des tôles cylindriques lisses concentriques, centrées par des bandes ondulées.

Pour améliorer la tenue aux accélérations transversales, causées par exemple par une rotation sur lui-même du véhicule spatial, le volume de stockage capillaire est avantageusement enfermé dans une enveloppe comprenant une ouverture d'échappement de gaz située à l'opposé du point de puisage. Cette ouverture sera généralement prolongée par un conduit débouchant à proximité de la paroi du réservoir dans une région de ce dernier qui constitue le point bas lorsque le réservoir est soumis à une accélération transversale élevée.

La zone de rupture de ménisque, placée autour de l'espace mort, se trouvera à très faible distance de l'axe du dispositif, ce qui augmente le seuil d'accélération susceptible de provoquer un désamorçage de la zone tampon. Cette zone de rupture communique avec l'intérieur du réservoir par des passages formés le long de la paroi par des lames de collection et de réalimentation. Elle communique également avec l'intérieur du réservoir, sous le fond de l'enveloppe dont une face au moins est en matériau non mouillable ou qui assure un confinement décroissant vers le débouché dans le réservoir par des passages de dégazage.

L'invention sera mieux comprise à la lecrute de la description qui suit des modes d'exécution particuliers de celle-ci, donnés à titre d'exemples non limitatifs. La description se réfère aux dessins qui l'accompagnent, dans lesquels:

– la figure 1 est une vue schématique d'un réservoir suivant un mode d'exécution de l'invention, en coupe suivant un plan passant par l'axe du dispositif de confinement représenté en élévation;

– la figure 2 est une vue en coupe à grande échelle du dispositif de confinement de la figure 1;

– la figure 3 est une vue en coupe suivant la ligne III-III de la figure 2;

– la figure 4 est une vue de détail, en coupe suivant un plan transversal à celui de la figure 2, montrant la constitution des canaux de la zone tampon;

– les figures 5A et 5B montrent schématiquement deux formes possibles de lames de réalimentation du dispositif de confinememt;

– la figure 6 est un schéma montrant le rôle du conduit de dégazage sur un satellite stabilisé par rotation au cours de certains phases au moins de sa mission.

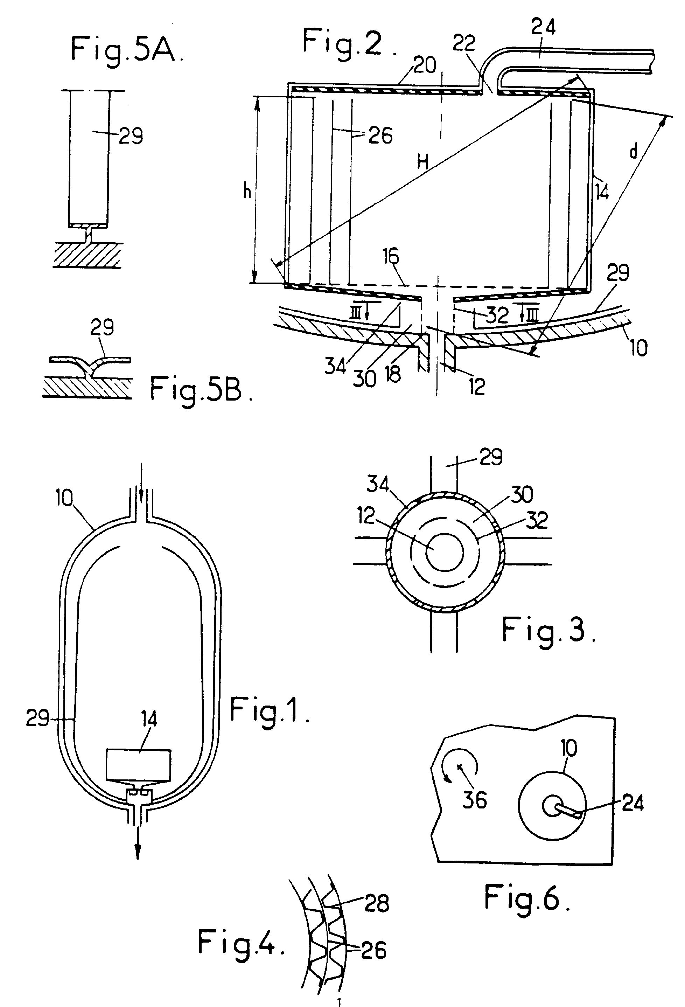

Le réservoir montré en figure 1, qu'on supposera destiné à stocker et à fournir un ergol, tel que la monométhylhydrazine MMH ou le peroxyde d'azote $N_2O_4$, sur un satellite, a une constitution générale classique permettant la pressurisation par gaz inerte sans membrane de séparation. Ce réservoir 10 comporte une coque cylindro-sphérique, généralement en titane allié, en plusieurs pièces assemblées. La zone de la coque qui constitue le point bas lors des phases de fourniture d'ergol sous accélération élevée est traversée par un passage de sortie 12 relié à des électrovannes d'alimentation de tuyères (non représentées).

Le passage 12 débouche non pas directement dans le réservoir, mais dans un dispositif de confinement à tension superficielle qu'on peut considérer comme constitué par une zone tampon capable de retenir un volume d'ergol suffisant pour une intervention individuelle de tuyère et un dispositif de collection d'ergol le long de la paroi interne de la coque et d'alimentation de la zone tampon au cours des périodes d'apesanteur.

La zone tampon est délimitée par une enveloppe 14 qui contient une structure capillaire jouant un rôle d'éponge, structure séparée par une grille 16 percée d'orifices capillaires d'un volume 18 entourant le point de puisage par le passage 12.

La structure capillaire délimite des canaux dirigés de la grille 16 vers le couvercle 20 de l'enveloppe 14 et dont le rayon hydraulique est constant ou augmente à partir de la grille.

Le couvercle 20 de l'envelope 14 qui isole la zone tampon du reste du réservoir est muni d'une ouverture 22 d'échappement de gaz vers le réservoir. Si ce réservoir 10 équipe un satellite qui n'est pas susceptible d'être soumis à des accélérations importantes transversales à l'axe du dispositif de confinement, l'ouverture 22 peut s'ouvrir directement dans le réservoir. Dans le cas contraire, elle s'ouvre dans un conduit 24 qui débouche à proximité du point bas du réservoir lorsque le satellite est en rotation. Les orifices de la grille 32 doivent être capables de supporter une pression hydrostatique importante si ce cas est susceptible de se produire (cas d'un satellite spinné intentionnellement ou non).

Pour éviter une réalimentation de la zone tampon en ergol à travers l'ouverture 22, avec emprisonnement eventuel de bulles de gaz l'épaisseur de l'intervalle capillaire entre la structure capillaire et le couvercle 20 doit croître vers l'ouverture 22 ou rester constante, le couvercle 20 étant alors revêtu intérieurement d'un matériau non mouillable par l'ergol, tel que le PTFE. De même le conduit 24, s'il est prévu, doit avoir un rayon hydraulique croissant ou, si le rayon est constant, être muni d'un revêtement interne non mouillable.

La structure capillaire peut notamment être constituée par une bande 26 enroulée en spirale, l'intervalle entre deux spires successives étant fixé par une feuille ondulée 28 (figure 4) qui en même temps fractionne cet intervalle en canaux capillaires séparés, ce qui réduit le rayon hydraulique (donc accroît l'accélération tolérable sans vidange des canaux) et améliore la stabilité.

Le dispositif de collection d'ergol et d'alimentation comprend, de façon classique, plusieurs lames 29 régulièrement réparties autour de l'axe du dispositif de confinement, au nombre de quatre dans le cas illustré figure 1. Ces lames délimitent, avec la paroi du réservoir 10, des conduits capillaires d'alimentation de la zone tampon, ayant une épaisseur constante ou qui diminue depuis l'extrémité libre des lames. La section droite de ces dernières peut prendre des formes très diverses. Toutefois, on utilisera en général une forme en T (figure 5A) ou en aile de mouette (figure 5B).

Les conduits capillaires délimités par les lames 29 débouchent dans un espace 30 de rupture préférentielle de ménisque gaz-liquide, entourant le volume 18, dont il est séparé par une grille 32 à orifices capillaires. L'espace 30 communique avec l'intérieur du réservoir par des ouvertures de dégazage 34 limitées par le fond de l'enveloppe 14, revêtu extérieurement d'un produit non mouillable par l'ergol, tel que le polytétrafluoréthylène. L'espace de rupture préférentielle est dimensionné et placé de façon que, lorsque s'exerce une accélération dont le module est proche du maximum supportable par l'éponge sans chasse de l'ergol, la zone tampon se trouve isolée des passages définis par les lames, quelle que soit l'orientation de l'accélération.

Les différents conduits et orifices capillaires du dispositif de confinement doivent présenter des différences de pressions statiques dues à la tension superficielle correctement échelonnées pour que les fonctions requises soient assurées. Pour plus de simplicité, on supposera cette différence de pression $\Delta P$ inversement proportionnelle au rayon hydraulique, ce qui est une approximation suffisante dans le cas où la section uniforme ne s'éloigne pas trop de celle du cercle inscrit.

Il faut tout d'abord noter que la capacité de stockage à donner à la zone tampon réamorçable en apesanteur doit correspondre au volume d'ergol nécessaire à chaque manoeuvre unitaire (0,7 l environ). Pour que la résistance à une accélération d'orientation aléatoire soit maximale, il faut rechercher une forme de zone tampon donnant une valeur minimum au rapport entre le volume d'ergol stocké et la dimension maximale de la forme. Si, pour des raisons de fabrication, on souhaite utiliser une forme cylindrique, la hauteur h du cylindre doit être comprise entre 1 fois et 2 fois le diametre D du cylindre. D'autre motifs conduiront généralement à adopter une valeur de D proche de h (figure 2). On peut par exemple adopter D = h = 110 mm.

Pour que les canaux de la structure capillaire puissent retenir l'ergol sous une accélération de module $\gamma$ et d'orientation quelconque, il faut que $\Delta P$ soit supérieur à $\rho\gamma H$ (H étant la dimension maximale de la zone tampon et $\rho$ la masse volumique de l'ergol). Pour une maille de section équilatérale, une accélération de $5.10^{-2}$ $m/s^2$ conduit avec un coefficient de sécurité de 2,8, à une maille de 5 mm de côté environ entre la bande 26 et la feuille 28.

Le jeu maximum entre la structure capillaire et le fond 34 de l'enveloppe 14 est déterminé pour tenir compte des cas où l'accélération est orientée de bas en haut. L'équilibre du remplissage des canaux est alors instable. En effet, le poids de la colonne de liquide dans le premier canal qui commence à se vider diminue. Cette diminution se poursuit jusqu'à ce que le canal se vide. Il faut donc que le jeu entre la structure capillaire et le fond de l'enveloppe supporte la différence de pression du ménisque dans les canaux, ajoutée au poids de la colonne liquide restée pleine, le tout avec un coefficient de sécurité. Dans la pratique, dans le cas envisagé plus haut, cela conduira à adopter un jeu inférieur à 0,8 mm.

Les trous de la grille 16, qui sera généralement constituée par une plaque percée de trous ronds ou de fentes, doit être prévue pour que les orifices assurent une différence de pression statique supérieure au double de celle que fournissent les canaux de stockage. Cela conduira généralement, toujours dans le cas de l'exemple numérique envisagé plus haut, à donner à la grille des trous circulaires de 1 mm de diamètre ou des fentes radiales dont la largeur est de l'ordre de 0,5 mm. Le motif pour lequel la différence de pression statique doit être au moins double de celle assurée par les canaux est qu'en fin de vidange de la zone tampon, les orifices de la grille 16 doivent supporter la somme de la différence de pression due au poids du liquide et de la différence de pression statique due au ménisque dans les canaux de stockage.

Quant aux grilles 32, elles devront supporter, avec un coefficient de sécurité, une différence de pression qui est la somme de la pression hydrostatique $\rho\lambda d$ (d étant la distance indiquée figure 2) dans le cas d'un satellite non spinné, de la différence de pression statique d'un ménisque de canaux de stockage, et de la perte de charge due à l'écoulement. Dans la pratique, on sera amené à utiliser une grille 32 ayant des trous de 1 mm de diamètre environ. Toutefois, si l'accélération maximale à subir est plus élevée, ces trous doivent avoir un diamètre plus réduit et peuvent aller jusqu'à 10 microns environ.

Les conduits de réalimentation en apesanteur limités par les lames 29 doivent être dimensionnés de façon à fournir un débit suffisant, sans rupture du ménisque latéral, lors du remplissage du réservoir tampon, ce qui implique une section droite de l'ordre de 100 $mm^2$ dans l'exemple donné plus haut. De plus, les lames de réalimentation 29 doivent être prévues pour réduire le plus possible le volume d'impuisable; la recherche d'un volume impuisable nul implique que l'écartement des lames 29 et de la paroi augmente au fur et à mesure qu'on s'éloigne de la zone tampon, par exemple pour passer de 5 mm à 15 mm. Mais si on recherche une masse morte (somme de la masse des lames et de celle des impuisables) minimale, l'écartement entre lames et coque peut être constant et tel que la différence de pression statique du ménisque formé soit inférieure à celle des ménisques de la zone tampon, avec un facteur de sécurité. Dans la pratique, cela pourra conduire à adopter un écartement de 5 mm.

Enfin, pour que les ménisques de la zone tampon n'aient à supporter au plus que la hauteur hydrostatique h, il faut que le ménisque qui se trouve face à la grille 32 d'alimentation se rompe avant les ménisques dans les canaux de la zone tampon. Pour cela il faut prévoir la grille d'alimentation 32 aussi prés que possible du centre de la zone tampon, ce qui conduit à la mettre autour de l'axe, c'est-à-dire minimiser la distance qui sépare la grille de réalimentation 32 du ménisque de la zone tampon le plus eloigné. Et la différence de pression statique $\Delta P$ pour laquelle se rompt le ménisque entre conduits délimités par une lame de remplissage 29 et grille de remplissage 32 doit remplir la condition:

$$\Delta P < \Delta P_1 \frac{H}{H+d}$$

H et d désignent les distances montrées sur la figure 2. $\Delta P_1$ est la différence de pression statique d'un ménisque dans un canal de la structure capillaire.

Dans l'exemple numérique envisagé plus haut, on trouve que les orifices de la grille 32 doivent fournir une différence de pression statique de 6,2 Pa pour un écartement de deux faces parallèles de 7,5 mm. Dans le cas d'un écartement de 10 mm, on trouve $\Delta P = 4,64$ Pa.

Toujours dans le même cas, on peut munir le couvercle 20, destiné à améliorer le taux de remplissage minimum acceptable en cas de rotation et à éviter le remplissage de l'éponge par le haut avec blocage du pompage, d'une ouverture 22 de 10 mm de diamètre.

Un réservoir comportant un dispositif de confinement de ce genre présente, entre autres avantages, celui de pouvoir être standardisé et utilise sur des satellites de caractéristiques très diverses, aussi bien pour alimenter des tuyères de transfert sur l'orbite définitive que des tuyères de maintien à poste, aussi bien sur un satellite stabilisé par rotation que sur un satellite stabilisé suivant les trois axes.

Il faut à ce sujet noter que la mission d'un satellite comporte diverses phases, au cours desquelles il est soumis à des accélérations très variables en amplitude et en direction et qu'au surplus ces accélérations dépendent du mode de stabilisation choisi.

– Lors du lancement, alors que le réservoir n'a généralement pas à fournir d'ergol, l'accélération et les vibrations sont très fortes. Les parties immergées du dispositif de confinement se vident d'ergol et doivent donc se réamorcer ultérieurement pour permettre l'alimentation des tuyères.

– Lors du transfert, l'accélération est élevée, mais dans une direction bien déterminée. Pour qu'un réservoir muni d'un dispositif de confinement selon l'invention soit alors utilisable, il suffit de placer la sortie 12 à un emplacement qui sera alors proche du point bas (suivant l'axe d'action du moteur d'apogée, s'il est alimenté par le réservoir ou transversalement en cas de risque de spin à plat).

– Lors des manoeuvres à faible accélération, ayant une direction aléatoire, par exemple lors de la mise et du maintien à poste, la quantité d'ergol consommée à chaque mise en action est faible et peut être fournie en totalité par la zone tampon du dispositif de confinement qui évite le passage de bulles de gaz de pressurisation vers les tuyères.

– A poste, entre les manoeuvres, le réservoir se trouve en quasi-apesanteur si le satellite n'est pas spinné. L'ergol se réoriente alors de façon que sa surface libre corresponde à un minimum d'énergie et les bulles éventuellement formées par désaturation de l'ergol se regroupent et rejoignent le gaz de pressurisation. Durant cette phase, la zone tampon se réalimente. Si le satellite est au contraire stabilisé par rotation, la conduite 24 orientée à l'opposé de l'axe de rotation 36 (figure 6) reste plongée dans la masse d'ergol résiduel.

L'invention est susceptible de nombreuses variantes de mise en oeuvre. En particulier, elle est applicable au cas où le réservoir est scindé par une cloison en deux compartiments, de façon que celui qui est muni du passage de sortie reste entièrement rempli d'ergol pendant toute la phase initiale de la mission. Elle s'applique également au cas où plusieurs réservoirs sont disposés en série (demande de brevet FR 82 20953 de la Société Demanderesse correspondant au EP-A-113.622, publié le 18.07.1984).

**Revendications**

1. Réservoir de stockage de liquide sous pression, comportant une coque (10), un passage de sortie (12) de liquide au travers de la coque, un dispositif de confinement à tension superficielle comprenant une structure capillaire disposée au voisinage dudit passage et formant une zone tampon communiquant avec le passage (12) qui communique également avec des conduits d'alimentation (29) prévus le long de la paroi de la coque (10) par l'intermédiaire d'orifices et d'une zone (30) de rupture de ménisque, caractérisé en ce que lesdits orifices sont capillaires et prévus dans une paroi (32) coaxiale au passage et reliant ce passage (12) à la zone tampon, en ce que l'espace mort central délimité par la paroi (32), la structure capillaire et le passage est de faible volume par rapport au volume de la zone tampon, et en ce que la zone (30) de rupture de menisque est placée autour de la paroi (32) dans le sens radial et est munie d'ouvertures de dégazage et alimentée par les conduits d'alimentation (29).

2. Réservoir selon la revendication 1, caractérisé en ce que le volume de structure capillaire est constitué par des zones annulaires minces sensiblement coaxiales fractionnées en canaux de développement dans le sens circonférentiel de même ordre de grandeur que l'épaisseur.

3. Réservoir selon la revendication 2, caractérisé en ce que le volume de structure capillaire est constitué par des zones délimitées par des parois lisses et des parois ondulées alternées.

4. Réservoir selon la revendication 2. caractérisé en ce que le volume de structure capillaire est constitué par des zones situées entre des tôles lisses cylindriques concentriques.

5. Réservoir selon la revendication 2, caractérisé en ce que les zones annulaires sont délimitées par une bande enroulée en spirale (26) et par une feuille ondulée (28) située entre les spires.

6. Réservoir selon l'une quelconque des revendications 1 à 5, caractérisé en ce que le volume de structure capillaire est enfermé dans une enveloppe (14) comprenant une ouverture (22) d'échappement de gaz située à l'opposé du point de puisage.

7. Réservoir selon la revendication 6, caractérisé en ce que ladite ouverture (22) s'ouvre dans un conduit (24) débouchant à proximité de la paroi du réservoir (10) dans une région qui constitue le point bas lorsque le réservoir est soumis à une accélération susceptible d'intervenir lors du puisage.

8. Réservoir selon la revendication 7, caractérisé en ce que le conduit présente un rayon hydraulique croissant à partir de l'ouverture (22) ou est de rayon hydraulique constant, mais revêtu intérieurement de matériau non mouillable.

9. Réservoir selon la revendication 6, 7 ou 8, caractérisé en ce que la zone de rupture du ménisque (30) communique avec l'intérieur du réservoir par des passages (34) limités par le fond de l'enveloppe revêtue d'un matériau non mouillable par l'ergol ou de confinement décroissant vers le débouché.

10. Réservoir selon l'une quelconque des revendications précédentes, caractérisé en ce que les conduits d'alimentation sont délimités par des lames (29) débouchant dans la zone de rupture de ménisque, parallèles à la paroi du réservoir ou s'en écartant à partir de la zone de rupture de ménisque.

**Claims**

1. A storage reservoir for pressurized liquid, comprising a tank (10), a liquid outlet passage (12) through said tank, a surface tension retention device comprising a capillary structure located in the vicinity of said passage and defining a buffer zone communicating with the passage (12) which also communicates with supply channels (29) formed along the wall of the tank (10) through orifices and a meniscus breakage zone (30), characterized in that said orifices are capillary and are formed in a partition (32) coaxial to the passage and connecting the passage (12) to the buffer zone, in that the central dead space defined by the partition (32), the capillary structure and the passage is of small volume as compared with the volume of the buffer zone, and in that the meniscus breakage zone (30) is located radially around the partition (32) and is formed with gas escape openings and fed by the supply channels.

2. Reservoir according to claim 1, characterized in that the capillary structure volume consists of substantially coaxial thin annular zones fractionated into passages whose cirumferential size is of the same order of magnitude as the thickness thereof.

3. Reservoir according to claim 2, characterized in that the capillary structure volume consists of zones defined by alternating smooth walls and corrugated walls.

4. Reservoir according to claim 2, characterized in that the capillary structure volume consists of zones located between concentrated cylindrical smooth sheet metal parts.

5. Reservoir according to claim 2, characterized in that the annular zones are defined by a spirally wound strip (26) and by a corrugated sheet (28) located between the turns.

6. Reservoir according to any one of claims 1 - 5, characterized in that the capillary structure volume is contained in a casing (14) having a gas exhaust opening (22) situated on the side opposite of that of the drawing-off point.

7. Reservoir according to claim 6, characterized in that said opening (22) opens into a duct (24) extending to a point located close to the wall of the tank (10) which forms the lower point when the reservoir is subjected to an acceleration likely to occur during drawing off.

8. Reservoir according to claim 7, characterized in that the duct has a hydraulic radius increasing from the opening (22) or has a constant hydraulic radius but is internally coated with non wettable material.

9. Reservoir according to claim 6, 7 or 8, characterized in that the meniscus breakage zone (30) communicates with the internal volume of the reservoir through passages (34) defined along the bottom wall of the envelope coated with material which is nonwettable by the ergol or of confinement decreasing toward the opening.

10. Reservoir according to any one of the preceding claims, characterized in that the supply channels are defined by blades (29) opening into the meniscus breakage zone, parallel to the wall of the reservoir or diverging therefrom from the meniscus breakage zone.

**Patentansprüche**

1. Lagerbehälter für Flüssigkeiten unter Druck mit einem Kessel (10), einem Austritt (12) für die Flüssigkeit quer durch den Kessel, mit einer Einrichtung zur Abkapselung durch Oberflächenspannung, welche eine Struktur mit Kapillarwirkung aufweist, die in der Nähe des Austritts angeordnet ist und eine Pufferzone bildet, welche mit dem Austritt (12) in Verbindung steht, der auch mit längs der Wand des Kessels (10) angeordneten Zulaufleitungen (29) über Öffnungen und über eine Flüssigkeitskuppenbruchzone (30) in Verbindung steht, dadurch gekennzeichnet, daß die Öffnungen kapillarförmig ausgebildet und in einer mit dem Austritt koaxialen Wand (32) vorgesehen sind, wobei diese Wand den Austritt (12) mit der Pufferzone verbindet, daß der zentrale Totraum, der durch die Wand (32), die Struktur mit Kapillarwirkung und den Austritt abgegrenzt ist, ein im Verhältnis zur Pufferzone geringes Volumen aufweist, und daß die Flüssigkeitskuppenbruchzone (30) radial um die Wand (32) gelagert ist, Entgasungsöffnungen aufweist und durch die Zulaufleitungen (29) gespeist ist.

2. Bahälter nach Anspruch 1, dadurch gekennzeichnet, daß das Volumen der Struktur mit Kapillarwirkung aus dünnen, ringförmigen und im wesentlichen koaxialen Zonen gebildet ist, welche in Kanäle unterteilt sind, deren Umfangsgröße von derselben Größenordnung wie deren Dicke ist.

3. Behälter nach Anspruch 1, dadurch gekennzeichnet, daß das Volumen der Struktur mit Kapillarwirkung aus Zonen gebildet ist, welche durch abwechselnd glatte und wellige Wandungen getrennt sind.

4. Behälter nach Anspruch 2, dadurch gekennzeichnet, daß das Volumen der Struktur mit Kapillarwirkung aus Zonen gebildet ist, welche zwischen glatten, zylindrischen, konzentrischen Blechen gelegen sind.

5. Behälter nach Anspruch 2, dadurch gekennzeichnet, daß die ringförmigen Zonen durch ein spiralförmig aufgerolltes Band (26) und durch ein zwischen den Spiralen gelegenes gewelltes Blatt (28) begrenzt sind.

6. Behälter nach einem der Ansprüche 1 bis 5, dadurch gekennzeichnet, daß das Volumen der Struktur mit Kapillarwirkung in eine Ummantelung (14) eingeschlossen ist, welche eine Gasaustrittsöffnung (22) gegenüber dem Entnahmepunkt aufweist.

7. Behälter nach Anspruch 6, dadurch gekennzeichnet, daß die Öffnung (22) in eine Leitung (24) mündet, welche in der Nähe der Wand des Kessels (10) in einen Bereich einmündet, welcher den tiefen Punkt bildet, wenn der Behälter einer Beschleunigung unterzogen ist, die während der Entnahme eintreten kann.

8. Behälter nach Anspruch 7, dadurch gekennzeichnet, daß die Leitung einen ausgehend von der Öffnung (22) ansteigenden oder konstanten hydraulischen Radius aufweist, aber innenliegend mit einem nicht benetzbaren Material ausgekleidet ist.

9. Behälter nach Anspruch 6, 7 oder 8, dadurch gekennzeichnet, daß die Flüssigkeitskuppenbruchzone (30) mit dem Inneren des Behälters durch Öffnungen (34) in verbindung steht, welche durch den Boden der Ummantelung begrenzt sind, wobei die Ummantelung mit einem durch das Ergol nicht benetzbaren Material ausgekleidet ist, oder eine in Richtung Öffnung abnehmende Abkapselung gewährleistet.

10. Behälter nach einem der vorangehenden Ansprüche, dadurch gekennzeichnet, daß die Eintrittsleitungen durch Platten (29) begrenzt sind, welche sich in die Flüssigkeitskuppenbruchzone Öffnen, parallel zur Wand des Behälters sind, oder sich von der Wand des Behälters entfernen ausgehend von der Flüssigkeitskuppenbruchzone.

Fig.5A.

29

29

Fig.5B.

Fig.2.

24

22

20

26

H

h

d

14

16

29

34  30  18

32

12

10

10

29

14

Fig.1.

34

29

12

30

32

Fig.3.

10

36

24

Fig.6.

28

26

Fig.4.